# DEMANDE DE BREVET EUROPEEN

(11) **EP 1 601 076 A2**
(43) Date de publication de la demande: **30.11.2005**
(21) Numéro de dépôt: 05104399.0
(22) Date de dépôt: 24.05.2005
(51) Int. Cl.: H02G 3/30

(54) **Pontet imperdable et procédé de mise en oeuvre de ce pontet**

(30) Priorité: 26.05.2004 FR 0451036
(71) Demandeur: SNECMA, 75015 Paris (FR)
(72) Inventeur: Duponchelle, Gilles, 91600, Savigny sur Orge (FR)
(74) Mandataire: Poulin, Gérard

(57) **Abrégé**

Pontet imperdable et procédé de mise en oeuvre de ce pontet.

Le pontet de fixation d'un élément allongé (8) sur une paroi comprend une partie de maintien (24, 28) qui reçoit un élément allongé (8) et au moins une aile de fixation (26). La partie de maintien (24, 28) est fermée. Il est de préférence réalisé dans un matériau permettant sa fixation par soudage et les ailes de fixation (26) comportent au moins un rebord (30).

## Description

### DOMAINE TECHNIQUE

L'invention concerne un pontet qui comprend une partie de maintien pour recevoir au moins un élément allongé et au moins une aile de fixation pour la fixation de ce pontet sur une paroi.

Il est courant d'utiliser des pontets pour la fixation d'éléments allongés par exemple des fils conducteurs électriques, sur une paroi. Ces pontets présentent une ou deux ailes de fixation qui permettent de les fixer sur la paroi par un moyen approprié et une partie de maintien qui maintient un ou plusieurs élément allongés contre la paroi.

Toutefois, les pontets actuellement connus présentent un certain nombre d'inconvénients. Leur mise en place est une opération malaisée car il est nécessaire de tenir le pontet d'une main et de le fixer sur la paroi de l'autre main, ce qui constitue une opération délicate, particulièrement si l'espace disponible est peu important ou encore, si la paroi sur laquelle il faut fixer le pontet est inclinée ou verticale.

Si le pontet tombe, il faut le récupérer ce qui peut entraîner des opérations supplémentaires de démontage de certaines pièces ce qui occassionne une perte de temps. C'est la raison pour laquelle, dans certains cas, il est nécessaire de concevoir et de réaliser un outillage particulier, par exemple un berceau ou un support, permettant de maintenir horizontale la paroi sur laquelle on doit fixer les pontets afin de rendre leur mise en place plus aisée. Toutefois, la conception d'un tel support implique un délai et des coûts supplémentaires.

La présente invention a pour objet un pontet qui remédie aux inconvénients de l'art antérieur.

Ces buts sont atteints conformément à l'invention, par le fait que le pontet qui comprend une partie de maintien fermée pour recevoir au moins un élément allongé et au moins une aile de fixation pour la fixation de ce pontet sur une paroi, comprend une partie principale comportant au moins une anse et au moins une bague montée dans l'anse.

La section de la partie de maintien peut présenter des formes diverses mais elle est de préférence sensiblement circulaire.

Grâce à ces caractéristiques les pontets sont enfilés sur l'élément allongé, par exemple le conducteur électrique. Etant donné que la partie de maintien du pontet est fermée, ces derniers sont maintenus par le conducteur électrique et ne peuvent s'échapper. Par suite, dans le cas où le pontet viendrait à échapper au cours d'une opération de mise en place, sa récupération est facile et rapide parce qu'il ne peut pas tomber dans des structures situées plus bas que la paroi sur laquelle les pontets doivent être fixés. Il en résulte un gain de temps et une meilleure qualité de la fixation des éléments allongés, par exemple des conducteurs électriques.

Par ailleurs l'étude, la conception et la réalisation d'un outillage de support spécifique pour la mise à l'horizontal de la paroi sur laquelle les pontets doivent être fixés n'est pas nécessaire, ce qui se traduit par une économie supplémentaire.

Avantageusement, les dimensions de la partie de maintien sont choisies de telles manière que le ou les éléments allongés, soient reçus avec un jeu.

Grâce à cette caractéristique les éléments allongés, par exemple des conducteurs électriques, sont maintenus sans être serrés. Ils peuvent donc coulisser aisément dans les pontets, par exemple s'il est nécessaire de les retirer. Il est également possible de disposer plusieurs éléments allongés dans un même pontet.

Avantageusement le pontet est réalisé dans un matériau permettant sa fixation par soudage et la ou les ailes de fixation comportent au moins un rebord.

La bague peut présenter une longueur supérieure à la largeur de la partie de maintien.

Le procédé de fixation d'élément allongé, notamment de conducteurs électriques, sur une paroi métallique se caractérise en ce que :
- on dispose un élément d'arrêt sur l'élément allongé ;
- on enfile un nombre convenable de pontets selon l'invention sur l'élément allongé ;
- on dispose l'élément allongé sur la paroi, l'élément d'arrêt étant placé vers le bas ;
- on remonte un premier pontet situé dans la position la plus basse jusqu'à une position de fixation à l'aide d'une électrode prenant appui sur un rebord du pontet ;
- on soude le pontet dans sa position de fixation ;
- on répète les deux étapes précédentes pour le pontet situé juste au-dessus du premier pontet et ainsi de suite jusqu'à ce que l'ensemble des pontets aient été fixés.

D'autres caractéristiques et avantages de l'invention apparaîtront encore à la lecture de la description qui suit d'exemples de réalisation donnés à titre illustratif en référence aux figures annexées. Sur ces figures :
- les figures 1 et 2 sont des représentations de pontets conformes à l'art antérieur ;
- la figure 3 est une vue en bout d'un pontet conforme à la présente invention ;
- la figure 4 est une vue en perspective d'une variante de réalisation du pontet de la figure 3 ;
- la figure 5 est une variante destinée à recevoir plusieurs conducteurs ;
- la figure 6 est une autre réalisation destinée à recevoir plusieurs conducteurs ;
- la figure 7 est une vue en coupe d'une canne d'instrumentation sur laquelle des pontets conformes à l'invention ont été fixés.

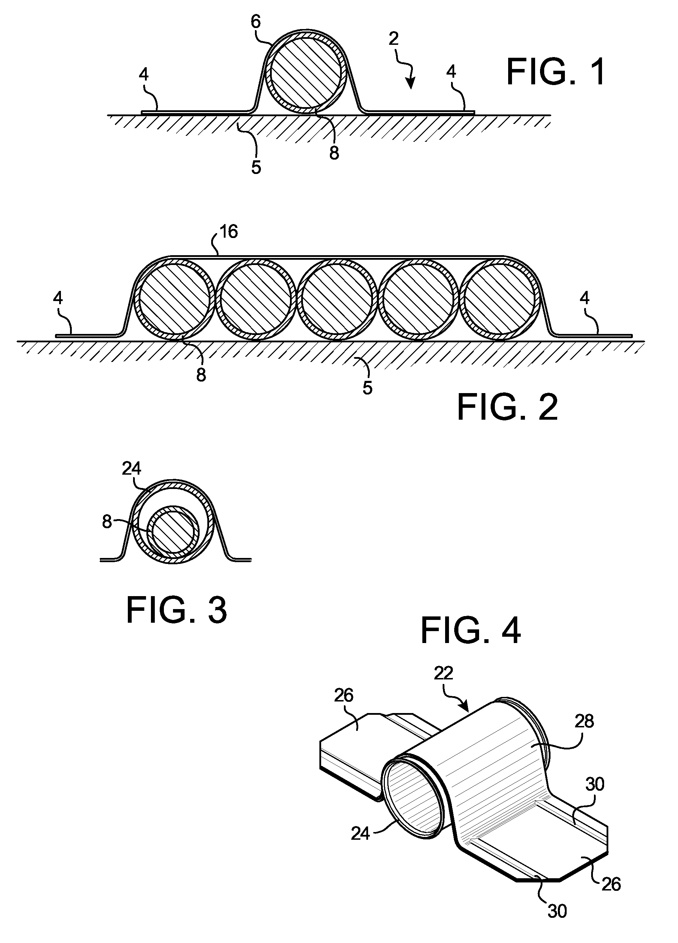

On a représenté sur la figure 1 un exemple d'un pontet conforme à l'art antérieur. Il comporte deux ailes 4 qui permettent de le fixer sur une paroi, par exemple au moyen de pointes ou de vis traversant les deux ailes 4, ou encore par des points de soudure sur une paroi métallique 5. Une partie de maintien 6 présentant une forme de V inversée arrondie à son extrémité retient un élément allongé 8, par exemple un conducteur électrique. Un pontet de ce type peut tomber au cours de sa mise en place, en particulier s'il est fixé sur une paroi inclinée ou verticale.

On a représenté sur la figure 2 une autre réalisation connue d'un pontet de l'art antérieur. Dans cette réalisation la partie de maintien 16 présente une forme allongée permettant de disposer plusieurs conducteurs électriques 8, cinq dans l'exemple représenté, côte à côte. Toutefois, la fixation d'un pontet de ce type est encore plus délicate que celle du pontet représenté sur la figure 1 parce qu'il faut maintenir les conducteurs électriques 8 parallèles les uns aux autres pendant l'opération de fixation.

On a représenté sur la figure 3 un premier exemple de réalisation d'un pontet imperdable conforme à l'invention. Il est constitué de deux parties, à savoir une partie principale 22, et une partie de maintien de maintien 24, dans cet exemple une bague. En variante le pontet pourrait être réalisé en une seule partie étant entendu que la partie de maintien doit être fermée.

La partie principale 22 comporte deux ailes 26 qui permettent la fixation du pontet sur une paroi et une anse 28 disposée entre les deux ailes 26. La bague 24 est placée à l'intérieur de l'anse 28. Elle est assemblée à la partie principale, par exemple au moyen de points de soudure. Elle peut présenter diverses formes mais elle est de préférence circulaire. Dans cette réalisation, le diamètre intérieur de la bague est choisi de manière à lui permettre de recevoir un seul conducteur. Dans un premier temps on enfile les pontet sur le conducteur électrique 8. Etant donné que le conducteur 8 est enfermé dans la bague 24, il est possible de prévoir un jeu de manière à autoriser un coulissement aisé du pontet. Dans une deuxième étape le conducteur électrique 8 sur lequel ont été enfilés les pontets 20 est placé sur la paroi et les ailes de fixation 26 sont fixées sur cette paroi.

On a représenté sur la figure 4 une vue en perspective d'une variante de réalisation du pontet de la figure 3. Dans cette variante les ailes 26 comportent des rebords 30 à chacune de leurs extrémités. En outre, la longueur de la bague 24 est supérieure à la largeur de la partie principale 22 de telle sorte que la bague 24 dépasse de part et d'autre de la partie principale. La variante de la réalisation de la figure 4 est particulièrement adaptée au soudage des pontets sur une paroi métallique. En effet il est possible de les déplacer à l'aide d'une électrode prenant appui sur un rebord 30 jusqu'à la position dans laquelle ils doivent être fixés puis de les souder dans cette position. Un pontet de ce type peut être fixé dans des endroits peu accessibles parce qu'il n'est pas nécessaire introduire la main pour les fixer, le passage de l'électrode suffisant à cet effet.

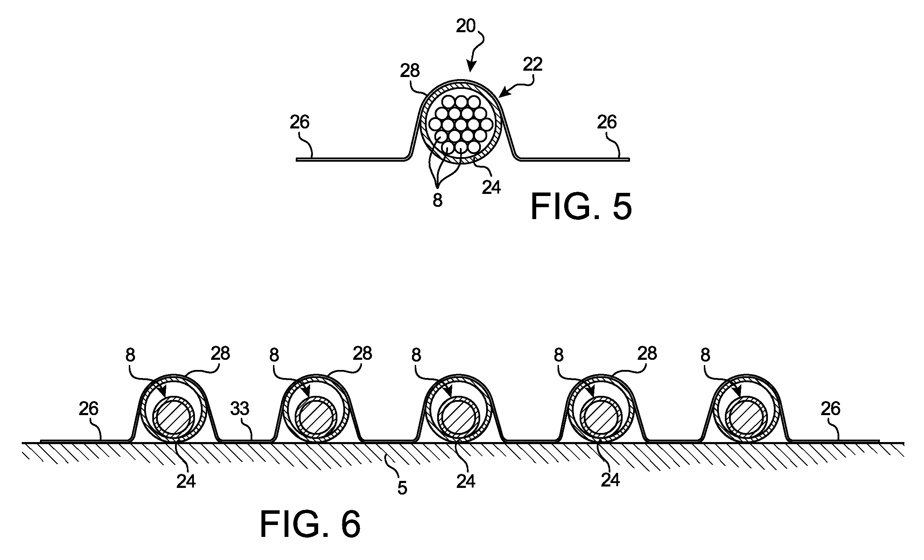

On a représenté sur la figure 5 une variante de réalisation du pontet de la figure 3 ou 4. Elle s'en distingue par le fait que le diamètre intérieur de la bague 24, au lieu d'être dimensionné pour recevoir un seul conducteur, peut en recevoir plusieurs, par exemple huit, voire plus. En outre, comme précédemment, du fait que les conducteurs sont enfermés dans la bague, il est possible de laisser un jeu entre les conducteurs et la bague. Ainsi, les conducteurs peuvent coulisser. Leur mise en place est facilitée parce que leur pose s'effectue en deux opérations. Dans un premier temps, on enfile l'ensemble des pontets sur les conducteurs. Dans une seconde étape, les conducteurs sur lesquels les pontets ont été enfilés sont placés sur la paroi et les ailes de fixation 26 sont soudées.

On a représenté sur la figure 6 une autre réalisation du pontet de l'invention destinée à plusieurs conducteurs. Elle ne comporte pas une bague unique pour l'ensemble des fils 8, mais une bague par fil. Afin d'assurer une bonne fixation de chacune des bagues 24 sur les anses 28, un minimum de points de soudure est requis, dans l'exemple, trois rangées de trois points. Par ailleurs, la fixation du pontet sur la paroi est effectuée par un pointage sur les ailes 26, mais aussi sur les parties de raccordement planes 33 situées entre deux anses 28 consécutives. Comme décrit précédemment, du fait que chaque conducteur est enfermé dans une bague, il est possible de laisser un jeu de sorte qu'ils peuvent coulisser. La mise en place s'effectue, comme précédemment, en deux opérations. Dans un premier temps, on enfile chaque conducteur dans la bague qui lui correspond, puis les conducteurs sur lesquels les pontets ont été enfilés sont placés sur la paroi et les ailes de fixation 26 ainsi que les parties intermédiaires 33 sont soudées.

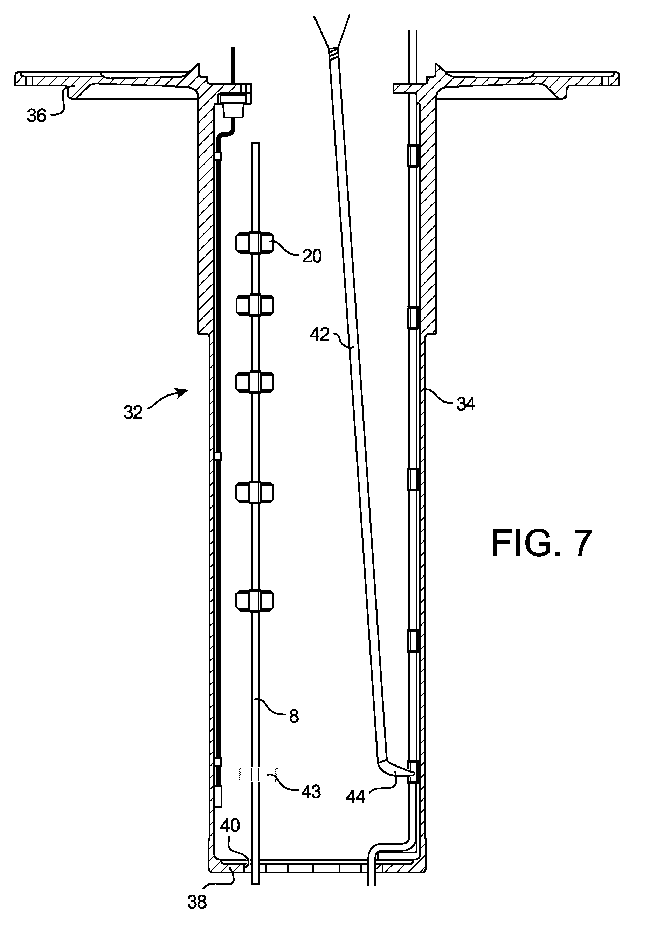

On a illustré sur la figure 7 l'application des pontets de l'invention au cheminement de conducteurs électriques de mesure, simplement appelés "mesures" en terme de métier, dans une canne d'instrumentation qui peut être appliquée, par exemple à la mesure de paramètres de fonctionnement d'un moteur d'avion. La canne d'instrumentation, désignée dans son ensemble par la référence générale 32, se compose d'un cylindre 34 allongé disposé verticalement et d'un flasque de fixation 36 situé à une extrémité ouverte du cylindre 34. Le fond 38 du cylindre 34 comporte un ou plusieurs trous 40 pour le passage des mesures 8. Les mesures 8 sont destinées à être raccordées à des parties non représentées du moteur auquel la canne est destinée. Les mesures 8 sont maintenues sur la paroi intérieure du cylindre 34, réalisé en acier, par une série de pontets 20 soudés électriquement. Le diamètre du cylindre 34 étant trop petit pour que l'on puisse introduire les mains, les pontets sont déplacés au moyen d'une électrode 42 d'un poste de soudure électrique. A cet effet, on dispose un élément d'arrêt 43, par exemple un morceau de ruban adhésif, sur le faisceau des mesures 8 puis on enfile les pontets 20 l'un après l'autre sur le faisceau des mesures à la manière de perles. On dispose l'ensemble à l'intérieur de la canne, l'élément d'arrêt 43 étant placé vers le bas à proximité du fond 38. On vient ensuite chercher le pontet situé immédiatement au-dessus de l'élément d'arrêt à l'aide de la pointe 44 de l'électrode 42 et on le remonte en prenant appui sur l'un des rebord 30 prévu sur les ailes 26(figure 4) jusqu'à la position à laquelle il doit être fixé et on le soude dans cette position. On effectue ensuite la même opération avec le pontet situé immédiatement au-dessus du premier pontet et ainsi de suite jusqu'à avoir fixer l'ensemble des pontets régulièrement espacés des uns des autres.

Le pontet qui vient d'être décrit permet un gain de temps et une meilleure qualité du cheminement des mesures 8. Une partie du travail s'effectuant avant le cheminement à l'intérieur de la canne le cycle global d'instrumentation est raccourci. Il est possible de faire varier le diamètre des pontets en fonction du nombre de mesures 8 et des diamètres utilisés pour le cheminement. On peut aussi faire coulisser les mesures 8 lors du démontage en laissant les pontets en place ce qui évite leur détérioration.

## Revendications

1. Pontet pour la fixation d'au moins un élément allongé (8) sur une paroi comprenant au moins une partie de maintien fermée (24, 28) qui reçoit au moins un élément allongé (8) et au moins une aile de fixation (26), **caractérisé en ce qu'**il comprend une partie principale (22) comportant au moins une anse (28) et au moins une bague (24) montée dans l'anse (28).

2. Pontet selon la revendication 1,
**caractérisé en ce que** la partie de maintien (24, 28) présente une section circulaire.

3. Pontet selon l'une des revendications 1 ou 2, **caractérisé en ce que** les dimensions de la partie de maintien (24, 28) sont choisies de telle manière que le ou les éléments allongés (8) soient reçus avec un jeu.

4. Pontet selon l'une des revendications 1 à 3, **caractérisé en ce qu'**il comporte une pluralité de parties de maintien (24, 28) séparées par des parties de raccordement (33).

5. Pontet selon l'une des revendications 1 à 4, **caractérisé en ce qu'**il comporte deux ailes (26) situées de part et d'autre de la ou des parties de maintien.

6. Pontet selon l'une des revendications 1 à 5, **caractérisé en ce qu'**il est réalisé dans un matériau permettant sa fixation par soudage.

7. Pontet selon l'une des revendications 1 à 6, **caractérisé en ce que** la ou les ailes de fixation (26) comportent au moins un rebord (30).

8. Pontet selon l'une des revendications 1 à 7, **caractérisé en ce que** la bague (24) présente une longueur supérieure à la largeur de la partie de maintien (28).

9. Procédé de fixation d'au moins un élément allongé (8), notamment de conducteurs électriques, sur une paroi métallique, **caractérisé en ce que** :
- on dispose un élément d'arrêt (43) sur l'élément allongé (8) ;
- on enfile un nombre convenable de pontets (20) selon l'une des revendications 8 ou 9 sur l'élément allongé ;
- on dispose l'élément allongé sur la paroi, l'élément d'arrêt (43) étant placé vers le bas ;
- on remonte un premier pontet situé dans la position la plus basse jusqu'à une position de fixation à l'aide d'une électrode (42) prenant appui sur un rebord (30) du pontet ;
- on soude le pontet dans sa position de fixation ;
- on répète les deux étapes précédentes pour le pontet situé juste au-dessus du premier pontet et ainsi de suite jusqu'à ce que l'ensemble des pontets aient été fixés.
